# EUROPEAN PATENT APPLICATION

(11) **EP 2 008 714 A1**
(43) Date of publication of application: **31.12.2008**
(21) Application number: 07110555.5
(22) Date of filing: 19.06.2007
(51) Int. Cl.: B01J 23/80, B01J 35/10, B01J 37/02, B01J 37/03

(54) **Process for the preparation of a cobalt-zinc oxide Fischer-Tropsch catalyst**

(71) Applicant: BASF Catalysts LLC, Florham Park, NJ 07932 (US)
(72) Inventor: The designation of the inventor has not yet been filed
(74) Representative: van Loon, C.J.J.

(57) **Abstract**

The invention is directed to a process for the preparation of a cobalt-zinc oxide Fischer-Tropsch catalyst, which process comprises providing an aqueous dispersion of zinc oxide powder in a reactor, adding an aqueous solution of a cobalt salt and precipitating cobalt from the solution onto the zinc oxide.

## Description

The invention is directed to a process for the preparation of a cobalt-zinc oxide Fischer-Tropsch catalyst.

On the manufacturing of Fischer-Tropsch catalysts, a substantial part of the patent literature is directed to impregnated catalysts, while another substantial part of the patent literature describes precipitated Fischer-Tropsch catalysts. In addition, there is a limited number of patents covering other manufacturing techniques, such as sol-gel micro-emulsion technologies, adsorption technologies, monolith-based technologies, etc.

US-A 4,826,800 describes a process for preparing a catalyst comprising cobalt and zinc oxide for use after reductive activation in the conversion of synthesis gas to hydrocarbons. The catalyst is prepared by mixing a solution of a soluble zinc salt and a soluble cobalt salt with a precipitant, such as ammonium hydroxide or ammonium carbonate, and recovering the precipitate.

US-A-5,945,458 and US-A-5,811,365 describe a Fischer-Tropsch process in the presence of a catalyst composition of a group VIII metal, e.g. cobalt, on a zinc oxide support. Such a catalyst is made by first preparing the support by adding a solution of zinc salt and other constituents to an alkaline bicarbonate solution. Next, the precipitate is separated from the bicarbonate solution by filtration to form a filter cake, which can thereafter be dried, calcined and loaded with the group VIII metal. The catalyst material is then formed into tablets, which tablets are crushed to form particles with a size of 250-500 µm, that can be used in a Fischer-Tropsch process. Additional posttreatments such as crushing, are required in order to obtain a catalyst powder for use in a slurry-phase process. However, the obtained average particle size, as indicated above, is still relatively large. Moreover, the lack of strength combined with the shaping and subsequent crushing method results in irregularly shaped particles and a broad particle size distribution.

In WO 03/090925, a novel manufacturing method for a Co/ZnO catalyst has been described, which is the result of efforts on fine-tuning the precipitation conditions, directly resulting in a catalyst with a very narrow particle size distribution and improved chemical, physical and attrition properties.

There is a need for further improving the preparation conditions, especially with respect to the required quantities of chemicals as raw materials and the production of waste water, the latter usually containing large amounts of (complexed) metal ions and nitrate. However, the preparation method should not result in different product properties, compared to the known products.

The invention concerns a new manufacturing route for Co/ZnO Fischer-Tropsch catalysts, thereby applying so called 'deposition precipitation'. With this technique, cobalt is precipitated in a slurry of zinc oxide powder from a cobalt salt solution, e.g. a cobalt nitrate solution, thereby applying a base, e.g. ammonium carbonate, sodium carbonate or their hydroxide analogues. During the deposition-precipitation process, the cobalt is deposited on or otherwise associated with the zinc oxide particles and, while not being bound by theory, an apparent chemical interaction is established between the precipitating Co-compound and the ZnO support, leading to a stable cobalt-zinc hydroxycarbonate or cobalt-zinc mixed (hydr)oxide structure as catalyst precursor.

Surprisingly, after drying and calcination, a Co₃O₄/ZnO mixed oxide composition is obtained with a similar pore-structure as the product obtained by simultaneous co-precipitation of both Co and Zn from a Co-Zn-nitrate solution. An important advantage of the novel deposition-precipitation route, as compared with the 'conventional' co-precipitation route, is the substantial reduction of total anions (usually nitrates) involved in the manufacturing process. Moreover, as a consequence from the above, also the required amount of ammonia (as ammonium carbonate from the precipitant solution) is also substantially less.

The invention is accordingly directed to a process for the preparation of a cobalt-zinc oxide Fischer-Tropsch catalyst, which process comprises providing an aqueous dispersion of zinc oxide powder in a reactor, adding an aqueous solution of a cobalt salt and an aqueous solution of a precipitating agent and precipitating the cobalt from the solution onto the zinc oxide.

The new catalyst manufacturing route concerns a so-called 'deposition precipitation' route, where the cobalt is precipitated from an aqueous (nitrate) solution, which cobalt is precipitated onto a starting zinc compound, present upfront as ZnO powder, slurried in a heel of water. The use of bulk ZnO powder (up to about. 95 wt % of the final catalyst) as starting reagent, instead of co-precipitating also the zinc from a zinc nitrate precursor solution, leads to a substantial reduction of the required chemicals, such as nitrates and ammonium carbonate, involved in the manufacturing process (reduction of nitrates with approx. 80%). Moreover, zinc oxide as raw material is much less hazardous than zinc nitrate, thus giving easier handling procedures in large-scale catalyst manufacturing.

Surprisingly, at the end of the deposition-precipitation process, after drying and calcination of the precipitated product, essentially no 'free' ZnO could be detected in the calcined product, as shown by extended TEM analyses in combination with elemental composition analyses. The observations indicate an apparent chemical reaction between the precipitating Co-ions and the ZnO powder, leading to a similar cobalt-zinc mixed oxide catalyst precursor. The occurrence of a chemical reaction of the precipitating compound with the zinc oxide surface was further confirmed by so called Moiree patterns in the TEM measurements, showing stacking of different metal oxide and metal spinel frameworks (ZnCo₂O₄, CoCo₂O₄) in the calcined catalyst precursor.

Moreover, interestingly, after calcination, the pore structure, surface area and pore size distribution of these deposition-precipitated cobalt-zinc oxide mixed oxides were similar to those obtained for co-precipitated cobalt-zinc oxide products.

A catalyst prepared according to the invention has been found to show similar chemical interactions between the cobalt and the zinc oxide in the structures as the catalysts obtained from co-precipitation. Evidence for that could be derived from the reduction properties of the calcined catalyst precursor. When treating the catalyst in a reducing atmosphere, e.g. dilute hydrogen, the extent of cobalt reduction was less in case of lower cobalt loadings, indicating stronger interactions of cobalt with zinc oxide. The same behaviour had been observed for co-precipitated catalyst precursors.

A catalyst prepared according to the invention has been found to be particularly favourable for use in a stirred slurry-phase reactor, a slurry bubble-column reactor (SBCR), a loop reactor or in a fluid-bed reactor.

A catalyst prepared according to the invention shows very good flow properties in dry form and/or when used in a stirred slurry reactor, and good dispersability properties with the reactants in the reaction mixture. The process of the invention allows for the preparation of products with a very appropriate particle size distribution, as indicated by the free-flowing properties of the dried catalyst, as can be observed, for example, when the catalyst is kept in a storage flask.

A catalyst prepared according to the invention shows very favourable separation properties and can for example very suitably be separated from the reaction mixture by filtration.

A catalyst prepared according to the invention has an extremely good balance between activity and separation properties.

Preferably the catalyst has mainly (i.e. at least 75 vol.%) pores having a diameter in the range of 10-150 nm. Much preferred is a catalyst having essentially no pores with a diameter of less than 5 nm (in particular less than 5 % of the pore volume formed by pores with a diameter of less than 5 nm). It has been found that such a catalyst has particularly good diffusion properties for reactant and product. Such a catalyst has also been found to be highly selective to C₅⁺ in the Fischer-Tropsch reaction.

Very good results have been achieved with a catalyst having a pore volume of less than 0.75 ml/g. The pore volume is preferably at least 0.05 ml/g. Particularly suitable is a catalyst with a pore volume of less than 0.60 ml/g.

The pore volume of the catalyst is determined by nitrogen adsorption (N₂-BET), measured on an Ankersmit Quantachrome Autosorb-6 apparatus, after degassing the sample at 180°C to a pressure of 3.3 Pa (25 mTorr).

Such a catalyst has been found to have particularly good physical strength properties, which is advantageous in applications in various types of reactors, including slurry-phase reactors, loop-reactors, slurry bubble-column reactors and fluid-bed reactors.

Also the surface area, as determined by nitrogen adsorption (N₂-BET) by an Ankersmit Quantachrome Autosorb-6 apparatus, after degassing at 180 °C down to a pressure of 3.3 Pa (25 mTorr), can be chosen within a wide range, depending on the intended purpose. For a Fischer-Tropsch process, this parameter may for example be chosen in the range of 1-500 m²/g. Preferably a catalyst has a surface area in the range of 5-160 m²/g. Very good results have been achieved with a catalyst having a surface area in the range of 5-150 m²/g.

A preferred catalyst is a particulate material wherein the particles have a more or less spherical geometry. Such a catalyst has been found to have very good mechanical strength and separation properties and a relatively high attrition resistance during use. Such a catalyst can suitably be prepared in accordance with the process of the present invention, in which process the precipitated material is optionally subjected to crushing and spray drying, optionally after the addition of additional binder, such as zinc oxide, silicium oxide or aluminium oxide, or colloidal versions of these oxides.

The composition of the catalyst can be varied widely, which composition the skilled professional will know to determine, depending upon the intended purpose.

The catalysts essentially consist of cobalt as the metallic component and zinc oxide as oxidic support. The atomic ratio of zinc to cobalt is preferably between 0.2 and 75.

It is further also possible that the catalyst contains one or more other components, such as components that are commonly employed as promoters in Fischer-Tropsch catalysts. The catalyst may also contain one or more promoters, for example hafnium, platinum, zirconium, palladium, rhenium, cerium, lanthanum or a combination thereof. When present, such promoters are typically used in an atomic ratio of metallic component to promoter of up to 10:1.

The preparation of the catalyst occurs in an aqueous system, wherein a slurry of zinc oxide particles are provided in a reactor. An aqueous solution of a cobalt salt, preferably cobalt nitrate, is fed into the reactor, together with an aqueous solution of an alkaline material, preferably ammonium carbonate. The temperature is preferably kept between 40 and 95°C. Once the precipitation has been completed, the catalyst precursor is separated from the slurry and further treated. This further treatment may include drying, shaping, calcining and reduction of the cobalt to the active metal phase.

The invention is now elucidated on the basis of the following examples, which are intended as illustration and not as limiting the scope of the invention.

### Examples

### Example 1: 16% Co/ZnO catalyst.

An acidic cobalt solution was prepared by loading 195.0 g Co(NO₃)₂.6H₂O-solution (14.5 wt% Co) in 1 liter water. A separate solution was prepared, dissolving 91.9 g ammonium carbonate in 1 liter of water. (carbonate/metal molratio = 2). Both solutions were simultaneously fed into a heel of water (1.75 liter), containing 160 gram ZnO powder (Norzinco, Harzsiegel, pore volume and surface area of 0.015 ml/g and 3.8 m²/g, respectively), thereby applying the following conditions: T = 75°C, agitation = 300 RPM and flow-rate = 1 liter/hr. The pH was constant during the precipitation, approx. 8.1. After completion of the deposition-precipitation process, the product was separated from the slurry by filtration, dried for 16 hours and 110°C and subsequently calcined for 5 hours at 500°C (ramp rate: 150°C/hour).

Chemical and physical analysis showed that the calcined catalyst contained 15.6% Co, while the pore volume and surface area of the catalyst were 0.30 ml/g and 30 m²/g, respectively. The Co₃O₄ crystallite size, as determined from the XRD pattern, was 124Å, while also the particle size distribution (very fine for bulk ZnO powder) had become much coarser. Extended TEM and elemental composition analyses on the calcined product showed the absence of 'free' ZnO, from showing that essentially all ZnO had reacted (interacted) with the precipitated Co. Evidence for the interaction between the cobalt and the ZnO could also be derived from the TPR-patterns: while bulk precipitated Co₃O₄ shows complete reduction at very low temperatures (typical at temperatures below 250°C), this catalyst showed the same TPR-pattern as the standard co-precipitated analogue, so two reduction peaks at typical 280-290°C (reduction of Co₃O₄ to CoO) and 420-430°C (CoO reduction to Co-metal). Like in the case of co-precipitated Co-ZnO catalysts and unlike bulk Co₃O₄ powder, the catalyst made according to this Example 1 also contains an amount of non-reducable cobalt, also confirming the similarity with the co-precipitated catalyst.

### Example 2: 20% Co/ZnO catalyst.

An acidic cobalt solution was prepared by loading 276.3 g Co(NO₃)₂ .6H₂O-solution (14.5 wt% Co) in 1 liter water. A separate solution was prepared, dissolving 130.3 g ammonium carbonate in 1 liter of water. (carbonate/metal molratio = 2). Both solutions were simultaneously pumped into a heel of water (1.75 liter), containing 160 gram ZnO powder (Norzinco, Harzsiegel, pore volume and surface area of 0.015 ml/g and 3.8 m²/g, respectively), thereby applying the following conditions: T = 75°C, agitation = 300 RPM and flow-rate = 1 liter/hr. The pH was constant during the precipitation, approx. 8.1. After completion of the deposition-precipitation process, the product was separated from the slurry by filtration, dried for 16 hours and 110°C and subsequently calcined for 5 hours at 500°C (ramp rate: 150°C/hour).

Chemical and physical analysis showed that the calcined catalyst contained 19.0% Co, while the pore volume and surface area of the catalyst were 0.23 ml/g and 27 m²/g, respectively. The Co₃O₄ crystallite size was 151Å, while also the particle size distribution (very fine for bulk ZnO powder) and become much coarser. Extended TEM and elemental composition analyses on the calcined product showed the absence of 'free' ZnO, from which it can be concluded that essentially all ZnO had reacted (interacted) with the precipitated Co. This was also confirmed by TPR measurements, as described for the catalyst of Example 1.

### Example 3: 30% Co/ZnO catalyst.

An acidic cobalt solution was prepared by loading 473.9 g Co(NO₃)₂.6H₂O-solution (14.5 wt% Co) in 1 liter water. A separate solution was made, dissolving 167.6 g ammonium carbonate in 1 liter of water. (carbonate/metal molratio = 1.5). Both solutions were simultaneously pumped into a heel of water (1.75 liter), containing 160 gram ZnO powder (Norzinco, Harzsiegel, pore volume and surface area of 0.015 ml/g and 3.8 m²/g, respectively), thereby applying the following conditions: T = 75°C, agitation = 300 RPM and flow-rate = 1 liter/hr. The pH was constant during the precipitation, approx. 7.6.

After completion of the deposition-precipitation process, the product was separated from the slurry by filtration, dried for 16 hours and 110°C and subsequently calcined for 5 hours at 500°C (ramp rate: 150°C/hour). Chemical and physical analysis showed that the calcined catalyst contained 31.6% Co, while the pore volume and surface area of the catalyst were 0.23 ml/g and 29 m²/g, respectively. The Co₃O₄ crystallite size was 151Å, while also the particle size distribution (very fine for bulk ZnO powder) and become much coarser. Extended TEM and elemental composition analyses on the calcined product showed the absence of 'free' ZnO, from which it can be concluded that essentially all ZnO had reacted (interacted) with the precipitated Co. The interaction between Co and ZnO was also clear from the TPR-patterns, as described for the catalyst of Example 1.

## Claims

1. Process for the preparation of a cobalt-zinc oxide Fischer-Tropsch catalyst, which process comprises providing an aqueous dispersion of zinc oxide powder in a reactor, adding an aqueous solution of a cobalt salt and precipitating cobalt from the solution onto the zinc oxide.

2. Process according to claim 1, wherein the atomic ratio of zinc to cobalt is between 0.2 and 75.

3. Process according to claim 1 or 2, wherein the aqueous cobalt solution is an aqueous cobalt nitrate solution.

4. Process according to claim 1-3, wherein the precipitation is initiated by the addition of a base, preferably of ammonium carbonate.

5. Process according to claim 1-4, wherein the reactor is stirred.

6. Process according to claim 1-5, wherein the precipitation is done at a temperature between 40 and 95°C.

7. Process according to claim 1-6, wherein additionally a promoting component, or precursor for the promoting component, is added during preparation, which component is preferably selected from hafnium, platinum, zirconium, palladium, rhenium, cerium, lanthanum or a combination thereof, as well as compounds.

8. Process according to claim 7, wherein the promoting component is used in an atomic ratio of cobalt component to metal component of the promoting component of up to 10:1.

9. Process according to claim 1-8, further comprising separating solid material from the aqueous dispersion, drying and calcining it.

10. Process according to claim 9, wherein the drying step includes spray drying, optionally in the presence of additional binder, such as zinc oxide, colloidal zinc oxide or another metal oxide.

11. Catalyst or catalyst precursor, obtainable by the process of claim 1-10.

12. Use of a catalyst prepared in accordance with claim 1-10, as a catalyst for the Fischer-Tropsch reaction.
